(19) **Europäisches Patentamt / European Patent Office / Office européen des brevets**

(11) **EP 1 914 031 B1**

(12) **EUROPEAN PATENT SPECIFICATION**

(45) Date of publication and mention
of the grant of the patent:
**05.12.2012 Bulletin 2012/49**

(51) Int Cl.:
**B23B 31/12** *(2006.01)*     **B23D 47/12** *(2006.01)*
**B23D 61/10** *(2006.01)*     **B27B 5/32** *(2006.01)*

(21) Application number: **07118247.1**

(22) Date of filing: **10.10.2007**

(54) **Fastener with nutating gear reduction**

Halter mit Taumeluntersetzung

Fixateur avec réduction d'engrenage en nutation

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **19.10.2006 US 551076**

(43) Date of publication of application:
**23.04.2008 Bulletin 2008/17**

(73) Proprietor: **Black & Decker Inc.
Newark, Delaware 19711 (US)**

(72) Inventor: **Zhang, Qiang J.
Baltimore, MD 21234 (US)**

(74) Representative: **Bell, Ian Stephen et al
Black & Decker
Patent Department
210 Bath Road
Slough
Berkshire SL1 3YD (GB)**

(56) References cited:
**EP-A- 0 924 038          WO-A-88/05386
US-A1- 2006 061 049**

EP 1 914 031 B1

**Description**

This application is a Continuation-In-Part Application of US Patent Application No. 11/223,123, filed September 12, 2005, which Claims priority from US Provisional Patent Application No. 60/610,531, filed on September 17, 2004.

The present invention relates to fasteners in general, and more particularly to a fastener that may be tightened without using a key (or other tools).

Conventional tool chucks may have a turn ring that is rotatable using a chuck key to extend and retract chuck jaws. Although such tool chucks are generally thought to provide acceptable Performance, they are not without shortcomings. For example, the conventional tool chuck requires cumbersome chuck key operations, chuck key retention, and other inconveniences.

In view of the shortcomings associated with chuck keys, tool chucks have been developed that have a turn ring (or sleeve) that is rotated manually, without using a chuck key, to tighten the chuck jaws. However, it may be difficult to impart sufficient clamping force using a keyless tool chuck.

US 2006/0061049 A1 discloses a chuck with a nutating gear.

EP 0 924 038 A2 discloses a bit attaching arrangement for a power tool, including a beveled pinion gear.

According to a first aspect of the present invention, there is provided a fastener comprising the features of claim 1.

According to a second aspect of the present invention, there is provided a method comprising the steps of claim 13.

The above and other features of the invention including various and novel details of construction and combinations of parts will now be more particularly described with reference to the accompanying drawings. It will be understood that the details of the example embodiments are shown by way of Illustration only and not as limitations of the invention. The principles and features of this invention may be employed in varied and numerous embodiments within the scope of the invention, as defined by the appended claims.

The present invention will become more fully understood from the detailed description below and the accompanying drawings, wherein like elements are represented by like reference numerals, which are given by way of illustration only and thus are not limiting of the present invention.

Figs. 1A and 1B are schematic illustrations of an example tool chuck with a nutating gear reduction.
Fig. 2 is an exploded view of a front sleeve and a rear sleeve that may be implemented in the tool chuck depicted in Figs. 1A and IB.
Fig. 3A is a schematic illustration of the nutating gear reduction system depicted in Fig. IB.

Fig. 3B is a partial perspective view of a nutating gear and a nut that may be implemented in the tool chuck depicted in Figs. 1A and IB.
Figs. 4A and 4C are schematic illustrations of another example tool chuck with a nutating gear reduction.
Fig. 4B is a perspective view of a chuck jaw that may be implemented in the tool chucks depicted in Figs. 4A and 4C.
Figs. 5A and 5B are schematic illustrations of another example tool chuck with a nutating gear reduction.
Fig. 6 is a partial exploded view of the tool chuck depicted in Fig. 5A.
Fig. 7 is a schematic Illustration of another example tool chuck with a nutating gear reduction
Fig. 8 is a schematic illustration of another example tool chuck with a nutating gear reduction.
Figs. 9-13 are schematic illustrations of a fastener with a nutating gear reduction in accordance with an example, non-limiting embodiment of the present invention.

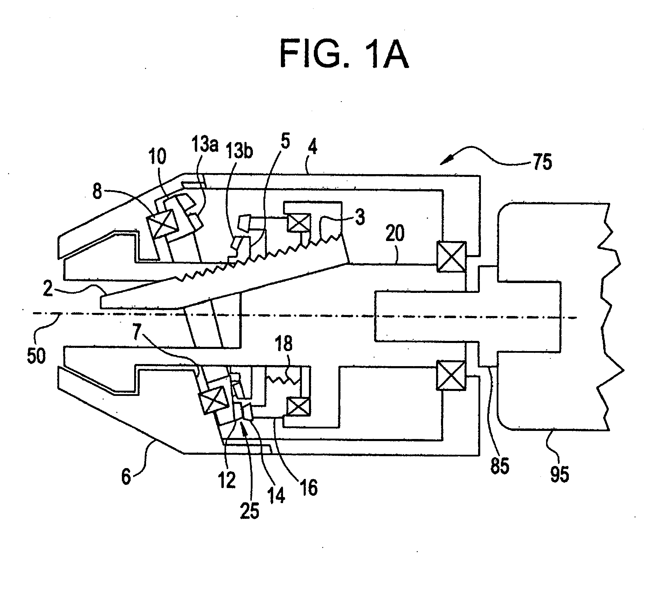

Fig. 1A shows an example of a tool chuck 75 with a nutating gear reduction. The tool chuck 75 may be provided on a power driver (e.g., a drill) for holding a tool (e.g., a drill bit). It will be appreciated, however, that the tool chuck 75 may be suitably implemented on a variety of power drivers (other than drills) for holding a variety of tools (other than drill bits).

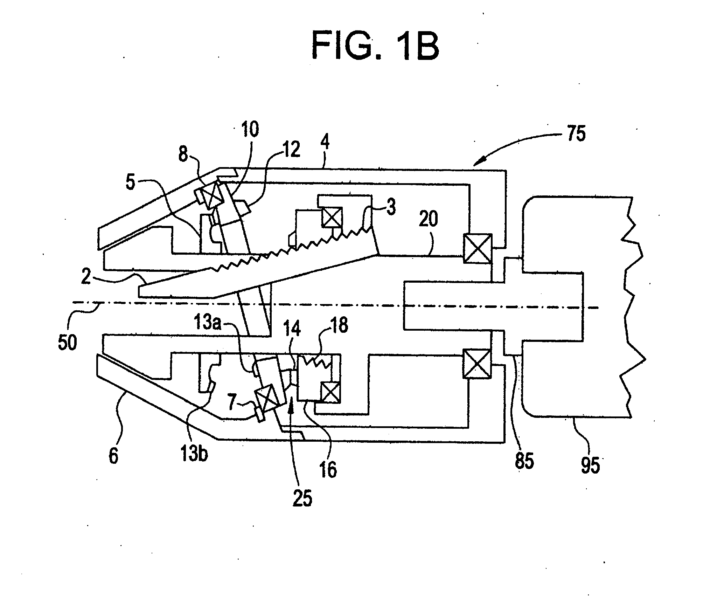

With reference to Fig. 1A, the tool chuck 75 may include a chuck body 20. The rear end of the chuck body 20 may be mounted on a spindle 85 of a power driver 95. The forward end of the chuck body 20 may have passageways that slidably support a plurality of chuck jaws 2. The chuck jaws 2 may be inclined so that respective forward ends of the chuck jaws converge toward an axis 50 of the chuck body 20. The chuck jaws 2 may have respective radially outward facing threads 3. For clarity of illustration, only a single chuck jaw 2 is depicted in Fig. 1.

In this example, the chuck jaws 2 may be characterized as "threaded" chuck jaws. That is, the chuck jaws 2 may be actuated (i.e., advanced and/or retracted) via the radially outward facing threads 3 interacting with radially inward facing threads 18 of a nut 16. However, the present example tool chuck is not limited in this regard. For example, the nutating gear reduction may be suitably implemented using "pusher" jaws, as will be discussed below with respect to other examples.

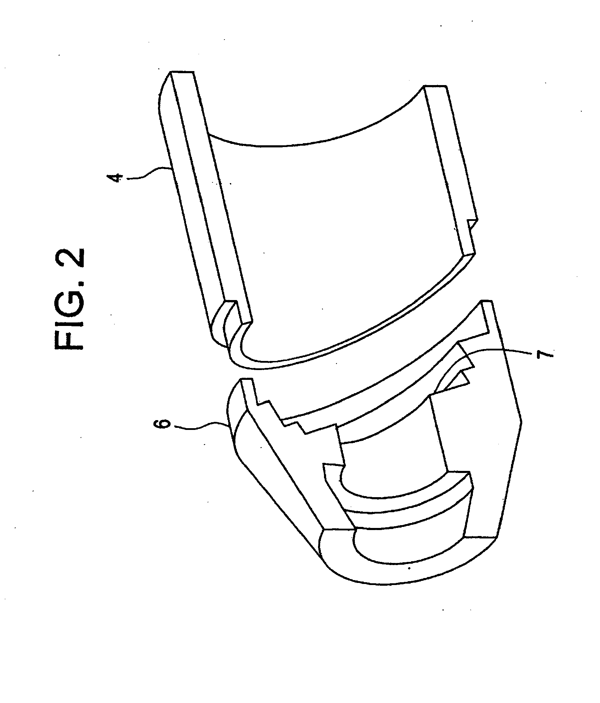

The chuck body 20 may rotatably support a rear sleeve 4 and a front sleeve 6. Turning briefly to Fig. 2, the rear sleeve 4 and the front sleeve 6 may be provided as two separate and distinct elements to facilitate assembly of the tool chuck 75. It will be appreciated, however, that the rear sleeve 4 and the front sleeve 6 may be formed of a unitary, one-piece construction. The rear sleeve 4 and the front sleeve 6 may be rotationally fixed together. In this way, the rear sleeve 4 and the front sleeve 6 may be rotated together relative to the chuck body 20. The front sleeve 6 may have a rear face 7 that is inclined relative to the axis 50. The rear face 7 of the front sleeve 6 may act on the front face of a nutating gear 10 through the bearing 8.

The nutating gear 10 may be arranged in the tool chuck 75 such that its axis is inclined relative to the axis 50 of the chuck body 20. The chuck body 20 may extend through an opening of the nutating gear 10. The rear face of the nutating gear 10 may include a set of teeth 12 that interact with the nut 16, and a set of teeth 13a that interact with a fixing gear 5.

The fixing gear 5 may be fixed to the chuck body 20. The chuck body 20 may extend through an opening of the fixing gear 5. The front face of the fixing gear 5 may include a set of teeth 13b that engage with the teeth 13a on the nutating gear 10. The number of teeth 13b on the fixing gear 5 and the number of teeth 13a on the nutating gear 10 may be selected so that the nutating gear 10 and the fixing gear 5 (and thus the chuck body 20) maintain the same relative rotational positions with respect to each other. Thus, as the nutating gear 10 nutates, the two sets of teeth 13a, 13b may interact so that the fixing gear 5 prevents the nutating gear 10 from rotating relative to the chuck body 20 about the axis 50. For example, an equal number of teeth 13a, 13b may be provided so that the fixing gear 5 prevents a rotational movement of the nutating gear 10 relative to the chuck body 20 about the axis 50.

The example is not limited to a nutating gear 10 that is rotationally fixed to the chuck body 20. For example, different numbers of teeth 13a, 13b may be provided so that the nutating gear 10 rotates relative to the chuck body 20. Such relative rotation (between the nutating gear 10 and the chuck body 20) may be controlled by varying the difference in the number of teeth 13a, 13b. In this regard, the rotational movement of the nutating gear 10 (relative to the chuck body 20) may be restrained by the interacting teeth 13a, 13b.

It will be appreciated that the nutating gear 10 may be rotationally fixed to the chuck body 20 by structure other than the fixing gear 5. For example, the chuck body 20 may include splines (not illustrated) that are received in radially inward facing passages (not illustrated) provided in the nutating gear 10. Such passages may extend along a longitudinal axis of the nutating gear 10. Thus, as the nutating gear 10 nutates, the splines may pass back and forth through the passages and at the same time prevent the nutating gear 10 from rotating relative to the chuck body 20. The cooperating splines and inward facing passages will be described and illustrated with respect to other examples.

A bearing 8 may be interposed between the front sleeve 6 and the nutating gear 10 to facilitate a relative rotational movement between the front sleeve 6 and the nutating gear 10.

The nut 16 may be mounted for rotation about the chuck body 20. The nut 16 may be of a unitary, one-piece construction or of a split nut variety, as is well known in this art. The nut 16 may have radially interior threads 18 that engage the radially outward facing threads 3 on the chuck jaws 2 for advancing and/or retracting the chuck jaws 2. The chuck body 20 may extend through an opening of the nut 16. The nut 16 may have a front face that is provided with a set of teeth 14. The teeth 14 of the nut 16 may engage with the teeth 12 of the nutating gear 10.

The nutating gear 10 may be inclined relative to the nut 16 so that the teeth 12 of nutating gear 10 may only touch the teeth 14 of the nut 16 at one contact area 25. Thus, the diameter and circumference of the nutating gear 10 may be larger than that of the nut 16. Further, the corresponding sets of teeth 12, 14 may be of the same pitch so that the larger nutating gear 10 may have more teeth 12 around its circumference than does the smaller nut 16.

In the example depicted in Fig. 1A, the sets of teeth 12 and 13a are provided on the same face of the nutating gear 10, and thus the fixing gear 5 and the nut 16 are provided on the same side of the nutating gear 10. However, the example is not limited in this regard. For example, as shown in Fig. 1B, the sets of teeth 12 and 13a may be provided on opposite faces of the nutating gear 10. Here, the fixing gear 5 and the nut 16 are provided on opposite sides of the nutating gear 10. In all other respect, the tool chuck 75 depicted in Fig. 1B may be similar to the tool chuck 75 depicted in Fig. 1A.

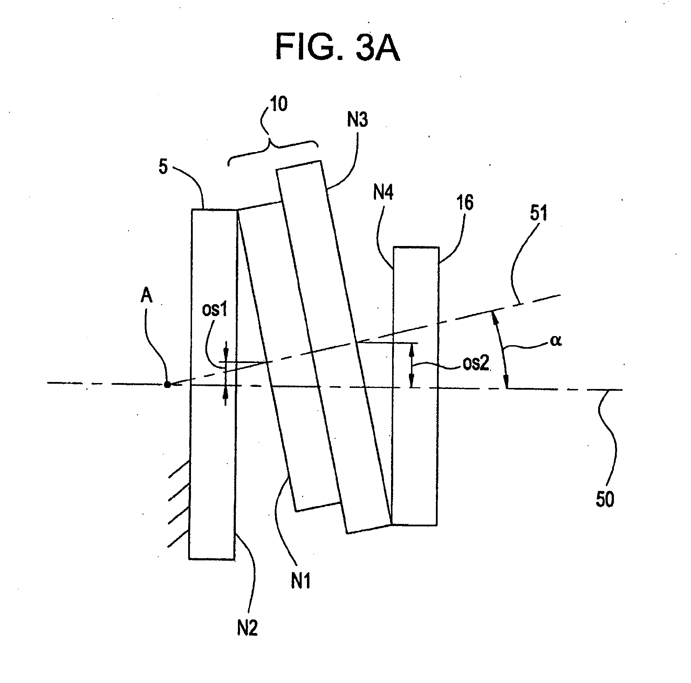

A gear ratio of the nutating gear reduction will be appreciated with reference to Fig. 3A, which schematically depicts the fixing gear 5, the nutating gear 10, and the nut 16 arranged as shown in Fig. IB. The gear ratio may be determined according to the following formula:

$$\text{Gear ratio} = N1*N4 \,/\, (N1*N4 - N2*N3),$$

where NI is the number of teeth 13a of the nutating gear 10, N2 is the number of teeth 13b of the fixing gear 5, N3 is the number of teeth 12 of the nutating gear 10, and N4 is the number of teeth 14 of the nut 16.

Thus, a designer may appropriately alter the teeth numbers NI to N4 to obtain the desired gear reduction.

For example, consider a scenario in which the number NI of teeth 13a of the nutating gear is 24, the number N2 of teeth 13b of the fixing gear is 24, the number N3 of teeth 12 of the nutating gear is 27, and the number N4 of teeth 14 of the nut is 25. Here, the gear ratio would equal 24*25/(24*25 - 24*27) or -12.5. A gear ratio of -12.5 means that 12.5 turns of the rear sleeve 4 would cause the nut 16 to rotate through 1 complete revolution. The negative value of the gear ratio indicates that the rear sleeve 4 and the nut 16 rotate in opposite directions. It will be appreciated that the threads 3 of the chuck jaws 2 and the threads 18 of the nut 16 may be left-handed threads or right-handed threads to achieve the desired chuck jaw actuation. For example, the threads 3, 18 may be appropriately selected so that a clockwise rotation of the rear sleeve 4 (as viewed from the front end of the tool chuck) causes the chuck jaws 2 to advance.

The interfacing teeth sets 13a, 13b (and 12, 14) may have the same pitch, and therefore the designer may alter the diameters of the gears to alter ratios of the interfacing teeth sets. That is, the diameters of the respective gears may be altered to achieve a desired gear ratio. To this end, the designer may vary parameters inclusive of a nutating angle a and gear teeth offsets os1 and os2. The nutating angle et is defined as the angle a between the axis 50 of the chuck body 20 and the axis 51 of the nutating gear 10. As shown in Fig. 3A, the axes 50, 51 intersect at an apex "A." The gear teeth offset os1 is measured from the axis 50 to a point on the axis 51 passing through a plane containing the set of teeth 13a of the nutating gear 10. The gear teeth offset os2 is measured from the axis 50 to a point on the axis 51 passing through a plane containing the set of teeth 12 of the nutating gear 10.

The tool chuck 75 may operate as follows. An operator may turn the rear sleeve 4 relative to the chuck body 20 causing the front sleeve 6 to rotate relative to the chuck body 20. The slanted rear face 7 of the front sleeve 6 may act upon the front face of the nutating gear 10 (via the bearing 8), which may remain rotationally fixed relative to the chuck body 20 (via the fixing gear 5, for example), thereby causing the nutating gear 10 to nutate about the chuck body 20. As the nutating gear 10 nutates, the contact area 25 between the nutating gear 10 and the nut 16 rotates around the axis 50.

As stated above, the nutating gear 10 may be rotationally fixed. Thus, during one nutation of the nutating gear 10, the nut 16 may be driven to rotate by an angular distance equivalent to the difference between the number N3 of teeth 12 of the nutating gear 10 and the number N4 of teeth 14 of the nut 16. Thus, the nutating drive may be considered as a reduction gear System.

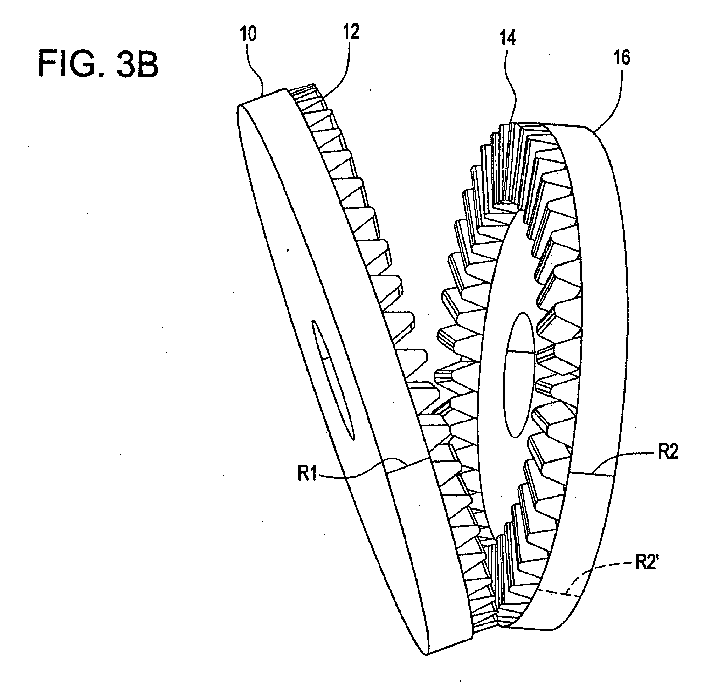

The interaction between the nutating gear and the nut 16 will be appreciated with reference to the schematic view of Fig. 3B. Fig. 3B shows the nutating gear 10 with the teeth 12 (the teeth 13a, which interact with the fixing gear 5, are not illustrated for clarity of illustration; the nut's radially inward facing threads are also left out for clarity). Here, the nutating gear 10 includes a reference mark RI and the nut 16 includes a reference mark R2. One rotation of the input sleeve 6 produces one nutation of the nutating gear 10. As the nutating gear 10 nutates, the reference mark RI may remain at the same rotational position relative to the chuck body 20. One nutation of the nutating gear 10 may turn the nut 16 by only a fractional rotation. The fractional rotation of the nut 16 relative to the chuck body 20 is illustrated as the reference mark R2 moves to a position R2' (shown in phantom).

As the nut 16 is driven to rotate, it may in turn drive the chuck jaws 2 opened or closed (depending on the rotation direction) by virtue of the interaction between the radially inward facing threads 18 and the radially outward facing threads 3.

As compared to conventional tool chucks, the nutating drive described above may achieve a greater mechanical advantage for tightening the nut 16, which drives the jaws 2 into contact with a tool, such as a drill bit (for example).

As stated above, it will be appreciated that the difference in the numbers N3, NI of teeth 12, 13a (respectively) provided on the nutating gear 10, the number N2 of teeth 13b provided on the fixing gear 5, and the number N4 of teeth 14 provided on the nut 16 may be varied to alter the final output drive ratio of driven nut 16.

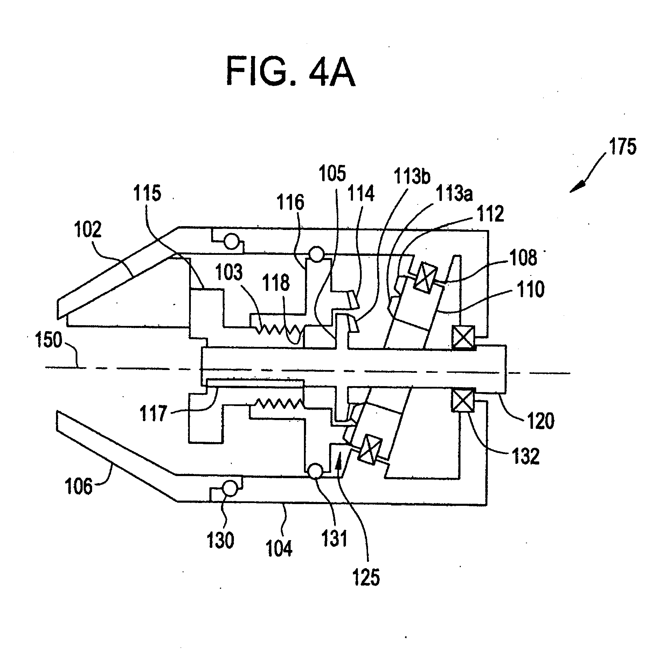

Fig. 4A shows another example of a tool chuck 175 with a nutating gear reduction. This example is similar to the previous example to the extent that it includes a nutating gear reduction. However, there are several notable differences as described below.

With reference to Fig. 4A, the tool chuck 175 may include a chuck body 120 defining an axis 150. As in the previous example, the rear end of the chuck body 120 may be mounted on a spindle of a power driver.

In this example, the chuck jaws 102 are "pusher" chuck jaws 102, as opposed to the threaded chuck jaws described with respect to the previous example. In this regard, the chuck jaws 102 may be advanced and/retracted relative to the chuck body 120 by a screw 115.

The chuck body 120 may extend through and support the screw 115 so that the chuck body 120 and the screw 115 may be rotationally fixed together and the screw 115 may be axially moveable relative to the chuck body 120 in the direction of the axis 150. The chuck body 120 may include a spline 117 that may be received in a corresponding feature provided on the screw 115. The spline 117 may guide the axial movement of the screw 115, and at the same time prevent a relative rotation between the chuck body 120 and the screw 115. It will be appreciated that the spline may instead be provided on the screw 115, and such spline may be received by a corresponding feature provided on the chuck body 120.

The rear end of the screw 115 may include radially outward facing threads 103 that interact with radially inward facing threads 118 of a nut 116. The interaction of the threads 103, 118 may influence the screw to advance and/or retract along the axis 150 of the chuck body 120. The forward end of the screw 115 may include radially oriented passageways in which the chuck jaws 102 are respectively supported. The radially oriented passageways may guide a radial movement of the chuck jaws 102, and at the same time may rotationally fix the chuck jaws 102 to the screw 115.

The chuck body 120 may support a two-part sleeve inclusive of a front sleeve 106 and a rear sleeve 104. The front sleeve 106 may include passageways through which the chuck jaws 102 are respectively slidable. The passageways of the front sleeve 106 may be inclined relative to the axis 150 of the chuck body 120. In this way, when the chuck jaws 102 are advanced (via the screw 115), the passageways of the front sleeve 106 may influence the chuck jaws 102 in a radial inward direction through the radially oriented passageways of the screw 115 and toward the axis 150. And when the chuck jaws 102 are retracted (via the screw 115), the passageways of the front sleeve 106 may influence the chuck jaws in a radial outward direction through the radially oriented passageways of the screw 115 and away from the axis 150. The passageways in the front sleeve 106 may rotationally fix the front sleeve 106 to the chuck jaws 102. Thus, the front sleeve 106, the chuck jaws 102, the chuck body 120, and the screw 115 may be rotationally fixed together.

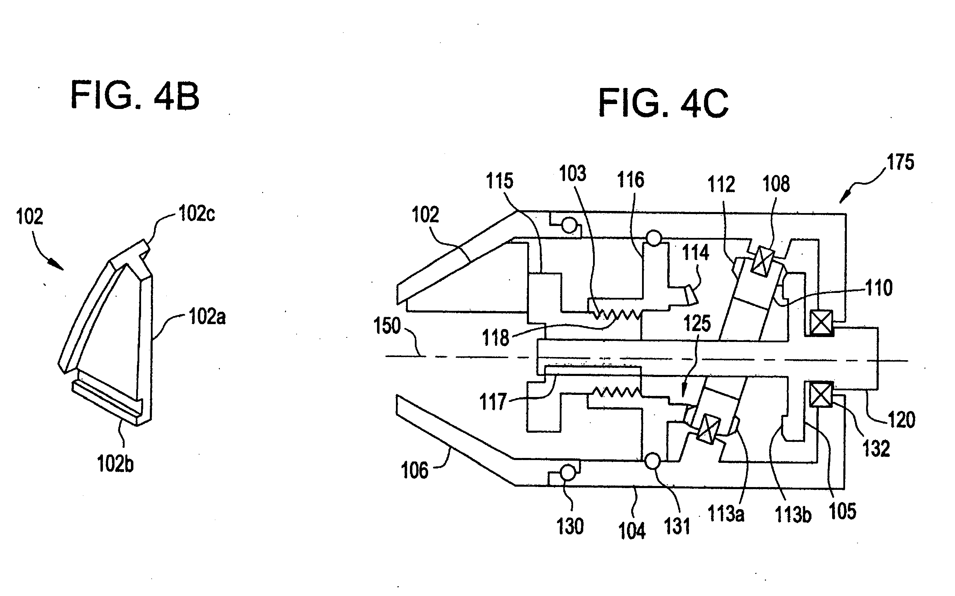

Turning briefly to Fig. 4B, an example pusher chuck jaw 102 is schematically illustrated. As shown, the chuck jaw 102 may have a tapered shape with a contact surface 102a. The chuck jaw 102 may have several features that cooperate with the various passageways provided in the tool chuck 175. For example, a first flange 102b may be provided to cooperate with the corresponding radially oriented passageway of the screw 115. And a second flange 102c may be provided to cooperate with the corresponding inclined passageway of the front sleeve 106. The chuck jaw flanges and the corresponding passageways may have complementary shapes. It will be readily apparent to those skilled in the art that the pusher chuck jaws 102 may have numerous and alternative features that cooperate with corresponding features of the tool chuck 175 to achieve the desired advancing and retracting movements of the chuck jaws 102.

Turning back to Fig. 4A, the rear sleeve 104 may be mounted for rotation on the chuck body 120 via a bearing 132. Thus, the rear sleeve 104 may be rotatable relative to the front sleeve 106. To facilitate this relative rotation, a bearing 130 may be interposed between the rear sleeve 104 and the front sleeve 106. The rear sleeve 104 may house a nutating gear 110 and the nut 116.

The nutating gear 110 may be mounted for rotation on the rear sleeve 104 such that its axis is inclined relative to the axis 150 of the chuck body 120. The chuck body 120 may extend through an opening of the nutating gear 110, The front face of the nutating gear 110 may include a set of teeth 112 that interact with the nut 116 and a set of teeth 113a that interact with a fixing gear 105.

The fixing gear 105 may be fixed to the chuck body 120. The chuck body 120 may extend through an opening of the fixing gear 105. It will be appreciated that the chuck body 120 and the fixing gear 105 may be of a unitary, one-piece construction. The rear face of the fixing gear 105 may include a set of teeth 113b that engage with the teeth 113a on the nutating gear 110. The number N2 of teeth 113b on the fixing gear 105 and the number NI of teeth 113a on the nutating gear 110 may be selected so that the nutating gear 110 and the fixing gear 105 (and thus the chuck body 120) maintain the same relative rotational positions with respect to each other. Thus, as the nutating gear 110 nutates, the two sets of teeth 113a, 113b may interact so that the fixing gear 105 prevents the nutating gear 110 from rotating relative to the chuck body 120 about the axis 150. For example, the same numbers NI, N2 of teeth 113a, 113b (respectively) may be provided so that the fixing gear 105 prevents a rotational movement of the nutating gear 110 relative to the chuck body 120 about the axis 150.

As in the previous example, this example is not limited to a nutating gear 110 that is rotationally fixed to the chuck body 120. For example, different numbers NI, N2 of teeth 113a, 113b (respectively) may be provided so that the nutating gear 110 rotates relative to the chuck body 120. Such relative rotation (between the nutating gear 110 and the chuck body 120) may be controlled by varying the difference in the numbers N1, N2 of teeth 113a, 113b (respectively). In this regard, the rotational movement of the nutating gear 110 (relative to the chuck body 120) may be restrained by the interacting teeth 113a, 113b.

As in the previous example, it will be appreciated that the nutating gear 110 may be rotationally fixed to the chuck body 120 by structure other than the fixing gear 105.

A bearing 108 may be interposed between the rear sleeve 104 and the nutating gear 110 to facilitate a relative rotational movement between the rear sleeve 104 and the nutating gear 110. The front face of the nutating gear 110 may be provided with a set of teeth 112.

The nut 116 may be axially fixed to the rear sleeve 104 and rotatable relative to the rear sleeve 104 via a bearing 131. The chuck body 120 may extend through an opening of the nut 116. The forward end of the nut 116 may include the radially inward facing threads 118 that interact with the radially outward facing threads 103 of the screw 115 for advancing and/or retracting the screw 115 (and thus the chuck jaws 102). The rear end of the nut 116 may be provided with a set of teeth 114. The teeth 114 of the nut 116 may engage with the teeth 112 of the nutating gear 110.

The nutating gear 110 may be inclined relative to the nut 116 so that the teeth 112 of nutating gear 110 may only touch the teeth 114 of the nut 116 at one contact area 125. Thus, the diameter and circumference of the nutating gear 110 may be larger than that of the nut 116. Further, the corresponding sets of teeth 112, 114 may be of the same pitch so that the larger nutating gear 110 may have more teeth 112 around its circumference than does the smaller nut 116.

In the example depicted in Fig. 4A, the sets of teeth 112 and 113a are provided on the same face of the nutating gear 110, and thus the fixing gear 105 and the nut 116 are provided on the same side of the nutating gear 110. However, the example is not limited in this regard. For example, as shown in Fig. 4C, the sets of teeth 112 and 113a may be provided on opposite faces of the nutating gear 110. Here, the fixing gear 105 and the nut 116 are provided on opposite sides of the nutating gear 110. Also, the nut 116 may be axially fixed to the rear sleeve 104 and rotatable relative to the rear sleeve 104 via two bearings 131. In alternative examples, another number of bearings 131 may be suitably implemented. Finally, as shown in Fig. 4C, the forward end of the chuck body 120 may include a blind hole 1. By way of example only, the blind hole 1 may have a hexagonal shape. The blind hole 1 may receive the shank of a tool. In other respects, the tool chuck 175 depicted in Fig. 4C may be similar to the tool chuck 175 depicted in Fig. 4A.

The tool chuck 175 may operate as follows. An operator may turn the rear sleeve 104 relative to the chuck body 120, the screw 115, the chuck jaws 102, the front sleeve 106, and the nutating gear 110. The rotation of the rear sleeve 104 may cause the nutating gear 110, which may remain rotationally fixed relative to the chuck body 120 (via the fixing gear 105, for example), to nutate about the chuck body 120. As the nutating gear 110 nutates, the contact area 125 between the nutating gear 110 and the nut 116 rotates around the axis 150.

As stated above, the nutating gear 110 may be rotationally fixed. Thus, during one nutation of the nutating gear 110, the nut 116 may be driven to rotate by an angular distance equivalent to the difference between the number N3 of teeth 112 of the nutating gear 110 and the number N4 of teeth 114 of the nut 116.

As the nut 116 is driven to rotate, it may drive the screw 115 to advance or retract along the axis 150 (depending on the rotation direction) by virtue of the interaction between the radially inward facing threads 118 and the radially outward facing threads 103. In this example, the advancing and retracting movements of the screw 115 may occur without any relative rotation between the screw 115 and the chuck body 120 (which remain rotationally fixed together via the spline 117, for example). The translational movement of the screw 115 may push or pull on the chuck jaws 102, thereby opening and/or closing the same.

For example, during a closing Operation, the screw 115 (together with the chuck jaws 102) may be advanced along the axis 150. During this time, the inclined passageways of the front sleeve 106 may influence the chuck jaws 102 in a radial inward direction (i.e., toward the axis 150) through the radially oriented passageways of the screw 115.

As in the previous example, the difference in the numbers N3, NI of teeth 112, 113a (respectively) provided on the nutating gear 110, the number N2 of teeth 113b provided on the fixing gear 105, and the number N4 of teeth 114 provided on the nut 116 may be varied to alter the final output drive ratio of driven nut 116.

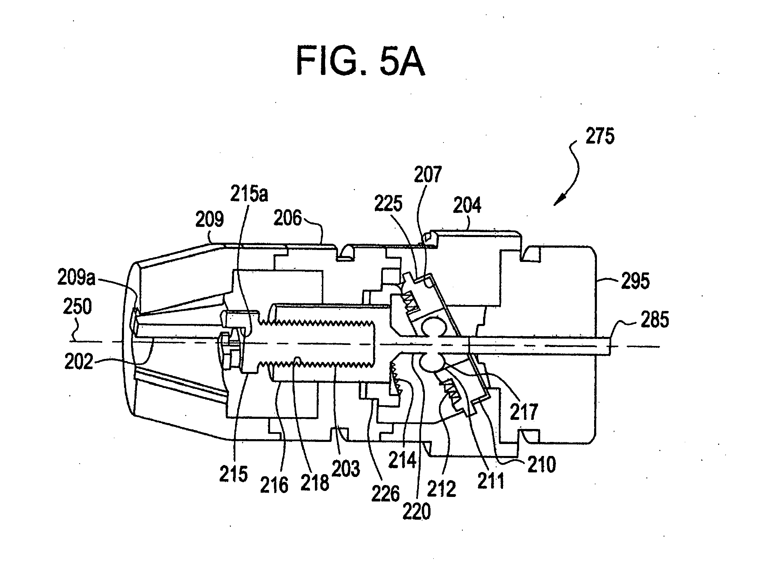

Figs. 5A - 6 show another example of a tool chuck 275 with a nutating gear reduction. This example is similar to the previous examples to the extent that it includes a nutating gear reduction. Also, as in the example discussed above in section II, this example may implement "pusher" chuck jaws 202. However, there are several notable differences as described below.

With reference to Fig. 5A, the tool chuck 275 may include a chuck body 220 defining an axis 250. As in the previous examples, the rear end of the chuck body 220 may be mounted on a spindle 285 of a power driver 295.

An intermediate portion of the chuck body 220 may be provided with splines 217 that interact with radially inward facing passages 21 of a nutating gear 210. In this example, the splines 217 may have a spherical shape. However, it will be appreciated that splines 217 having numerous, alternative shapes may be suitably implemented. In this example, four splines 217 may be uniformly spaced around the circumference of the chuck body 220. However, the example is not limited in this regard. For example, the number and the spacing between the splines 217 may be varied.

The forward end of the chuck body 220 may include a nut 216. The nut 216 may be screw coupled to a screw 215. To this end, the nut 216 may have radially interior threads 218 that engage radially outward facing threads 203 of the screw 215. The chuck body 220 (together with the nut 216) may be rotatable relative to the screw 215. During this relative rotation, the interaction of the threads 203, 218 may influence the screw 215 to advance and/or retract along the axis 250 of the chuck body 220.

The forward end of the screw 215 may include radially oriented passageways 215a in which the chuck jaws 202 are respectively supported. The radially oriented passageways 215a may guide a radial movement of the chuck jaws 202, and at the same time may rotationally fix the chuck jaws 202 to the screw 215.

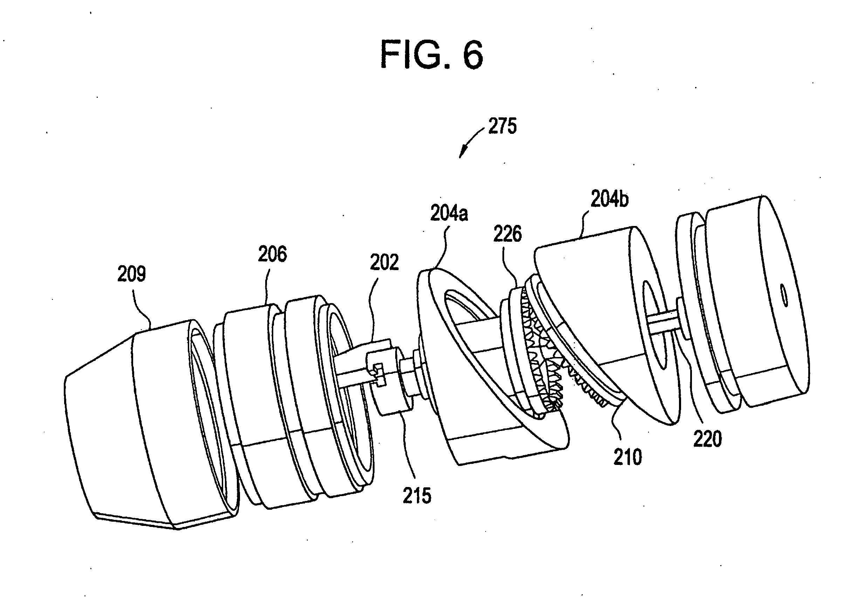

The chuck body 220 may support a two-part sleeve inclusive of a front sleeve 206 and a rear sleeve 204. The front sleeve 206 may be mounted for rotation on the chuck body 220. The chuck body 220 may extend through an opening of the front sleeve 206. The forward end of the front sleeve 206 may fixedly support a cone 209. In this example, and with reference to Fig. 6, the front sleeve 206 and the cone 209 may be provided as two separate elements to facilitate assembly of the tool chuck 275. It will be appreciated, however, that the front sleeve 206 and the cone 209 may be formed of a unitary, one-piece construction.

The cone 209 may include passageways 209a through which the chuck jaws 202 are respectively slidable. The passageways 209a of the cone 209 may be inclined relative to the axis 250 of the chuck body 220. In this way, when the chuck jaws 202 are advanced (via the screw 215), the passageways 209a of the cone 209 may influence the chuck jaws 202 in a radial inward direction through the radially oriented passageways 215a of the screw 215 and toward the axis 250. And when the chuck jaws 202 are retracted (via the screw 215), the passageways 209a of the cone 209 may influence the chuck jaws 202 in a radial outward direction through the radially oriented passageways 215a of the screw 215 and away from the axis 250. The passageways 209a in the cone 209 may rotationally fix the cone 209 to the chuck jaws 202. Thus, the chuck jaws 202, the cone 209,

the front sleeve 206, and the screw 215 may be rotationally fixed together.

The rear end of the front sleeve 206 may fixedly support an output gear 226. The chuck body 220 may extend through an opening of the output gear 226. The rear face of the output gear 226 may be provided with a set of teeth 214. In this example, and with reference to Fig. 6, the front sleeve 206 and the output gear 226 may be provided as two separate elements to facilitate assembly of the tool chuck 275, and to allow for a convenient manner in which the output gear 226 may be removed and replaced by a new or alternative output gear (e.g., an output gear having a different number of teeth). It will be appreciated, however, that the front sleeve 206 and the output gear 226 may be formed of a unitary, one-piece construction.

The rear sleeve 204 may be mounted for rotation on the chuck body 220. The chuck body 220 may extend through an opening of the rear sleeve 204. The rear sleeve 204 may be rotatable relative to the front sleeve 206. The rear sleeve 204 may have a front face 207 that is inclined relative to the axis 250 of the chuck body 220. The front face 207 of the rear sleeve 204 may act upon the rear face of a nutating gear 210. As shown in Fig. 6, the rear sleeve 204 may be of a two-part construction to facilitate assembly. The two parts 204a, 204b of the rear sleeve 204 may be assembled together to support opposing sides of the nutating gear 210. It will be appreciated, however, that the rear sleeve 204 may be of a unitary, one-piece construction.

The nutating gear 210 may be arranged in the tool chuck 275 such that its axis is inclined relative to the axis 250 of the chuck body 220. The chuck body 220 may extend through an opening of the nutating gear 210. The nutating gear 210 may be mounted in such a way that it remains rotationally fixed relative to the chuck body 220. That is, the nutating gear 210 may nutate without rotating relative to the chuck body 220 about the axis 250. To this end, the nutating gear 210 may include radially inward facing features that may cooperate with the spherical splines 217 provided on the chuck body 220. In this example, the radially inward facing features may be in the form of passages 211 that respectively receive the spherical splines 217. The passages 211 may extend along a longitudinal axis of the nutating gear 210. Thus, as the nutating gear 210 nutates, the spherical splines 217 may pass back and forth through the passages 211 and at the same time may prevent the nutating gear 210 from rotating relative to the chuck body 220.

A bearing (not illustrated) may be interposed between the rear sleeve 204 and the nutating gear 210 to facilitate a relative rotational movement between the rear sleeve 204 and the nutating gear 210. The front face of the nutating gear 210 may be provided with a set of teeth 212. The teeth 212 of the nutating gear 210 may engage with the teeth 214 of the output gear 226.

The nutating gear 210 may be inclined relative to the output gear 226 so that the teeth 212 of nutating gear 210 may only touch the teeth 214 of the output gear 226 at one contact area 225. Thus, the diameter and circumference of the nutating gear 210 may be larger than that of the output gear 226. Further, the corresponding sets of teeth 212, 214 may be of the same pitch so that the larger nutating gear 210 may have more teeth 212 around its circumference than does the smaller output gear 226.

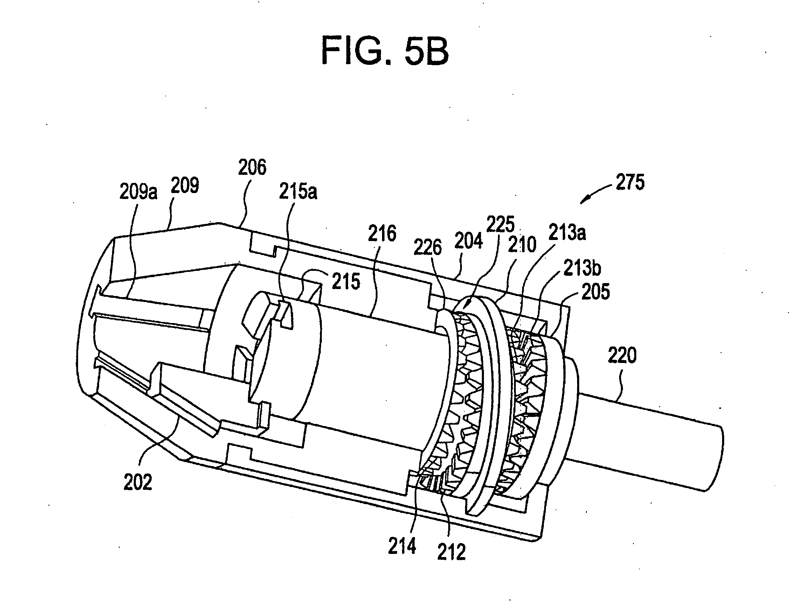

It will be appreciated that the nutating gear 210 may be rotationally fixed to the chuck body 220 by structure other than the spherical splines 217. For example, and briefly turning to Fig. 5B, a fixing gear 205 may be fixed to the chuck body 220. The front face of the fixing gear 205 may include a set of teeth 213b that engage with a set of teeth 213a provided on a rear face of the nutating gear 210. The number N2 of teeth 213b on the fixing gear 205 and the number Nl of teeth 213a on the nutating gear 210 may be selected so that the nutating gear 210 and the fixing gear 205 (and thus the chuck body 220) maintain the same relative rotational positions with respect to each other. Here, opposite faces of the nutating gear 210 have respective sets of teeth 212 and 213a. Thus, the fixing gear 205 and the output gear 226 may be provided on opposite sides of the nutating gear 210.

As shown in Fig. 5B, a bearing 221 may be provided between the chuck body 220 and the front sleeve 206. To this end, the chuck body 220 and the front sleeve 206 may be provided with cooperating grooves in which the bearing 221 is provided. The bearing 221 may axially fix together and facilitate a relative rotation between the chuck body 220 and the front sleeve 206. In other respects, the tool chuck 275 depicted in Fig. 5B may be similar to the tool chuck 275 depicted in Fig. 5A.

The tool chuck 275 may operate as follows. An operator may turn the rear sleeve 204 relative to the chuck body 220 and the nutating gear 210. The rotation of the rear sleeve 204 may cause the nutating gear 210, which may remain rotationally fixed relative to the chuck body 220 (via the spherical splines 217 shown in Fig. 5A and/or the fixing gear 205 shown in Fig. 5B, for example), to nutate about the chuck body 220. As the nutating gear 210 nutates, the contact area 225 between the nutating gear 210 and the output gear 226 may move around the circumference of the chuck body 220.

As stated above, the nutating gear 210 may be rotationally fixed. Thus, during one nutation of the nutating gear 210, the output gear 226 may be driven to rotate by an angular distance equivalent to the difference between the number N3 of teeth 212 of the nutating gear 210 and the number N4 of teeth 214 of the output gear 226.

The driven output gear 226 may rotate together with the front sleeve 206 and the cone 209. The cone 209 (via the passageways 209a) rotates together with the chuck jaws 202. The chuck jaws 202 (seated in radial passageways 215a) may drive the screw 215 to rotate relative to the nut 216 of the chuck body 220. This relative rotation may advance or retract the screw 215 along the axis 250 (depending on the rotation direction) by virtue of the interaction between the radially inward facing threads 218 and the radially outward facing threads 203. As the screw 215 advances or retracts relative to the chuck body 220, the screw 215 may push or pull on the chuck jaws 202, thereby opening and/or closing the same.

For example, during a closing operation, the screw 215 (together with the chuck jaws 202) may be rotated relative to the chuck body 220 and advanced along the axis 250 of the chuck body 220. During this time, the chuck jaws 202 may advance through (and be guided by) the inclined passageways 209a of the cone 209. The inclined passageways of the cones 209 may influence the chuck jaws 202 in a radial inward direction (i.e., toward the axis 250) through the radially oriented passageways of the screw 215.

During actuation of the chuck jaws 202, the rear sleeve 204 and the front sleeve 206 may rotate relative to the chuck body 220. Further, the rear sleeve 204 and front sleeve 206 may rotate relative to each other. Relative to the chuck body 220, the rear sleeve 204 may rotate in a direction that is counter to the rotational direction of the front sleeve 206.

As in the previous examples, the difference in the number N3 of teeth 212 provided on the nutating gear 210 and the number N4 of teeth 214 provided on the output gear 226 may be varied to alter the final output drive ratio of the output gear 226.

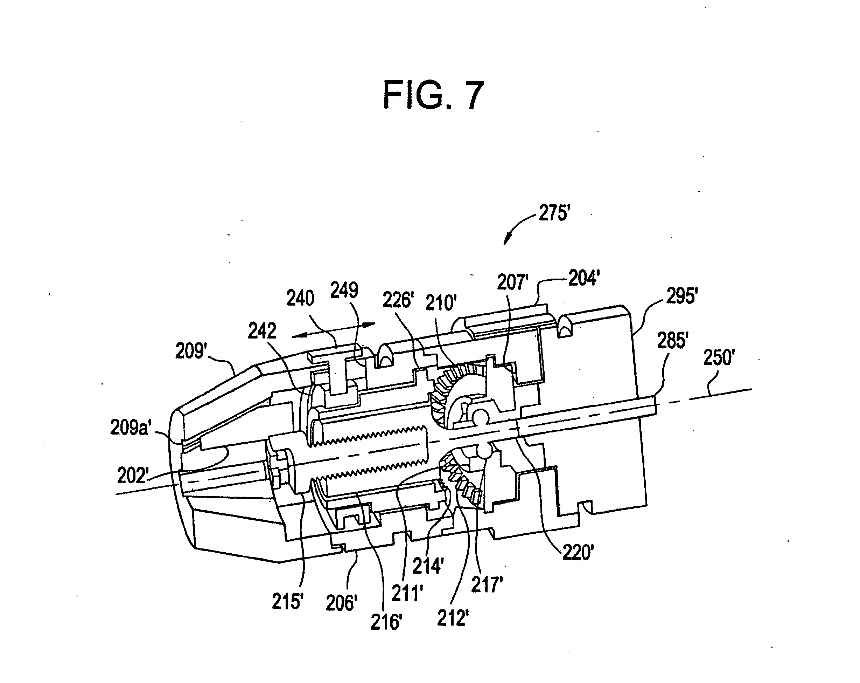

Fig. 7 shows another example, non-limiting example of a tool chuck 275' with a nutating gear reduction. This example is similar to the example discussed above in section III. However, this example may additionally include a switch 240 for disabling the nutating gear reduction mechanism, as described below.

With reference to Fig. 7, the tool chuck 275' may include a chuck body 220' defining an axis 250'. The rear end of the chuck body 220' may be mounted on a spindle 285' of a power driver 295'.

An intermediate portion of the chuck body 220' may be provided with splines 217' that interact with radially inward facing passages of a nutating gear 210'.

The forward end of the chuck body 220' may include a nut 216'. The nut 216' may be screw coupled to a screw 215'. The nut 216' may have radially interior threads that engage radially outward facing threads of the screw 215'. The chuck body 220' (together with the nut 216') may be rotatable relative to the screw 215' to advance and/or retract the screw 215' along the axis 250' of the chuck body 220'.

The forward end of the screw 215 may include radially oriented passageways in which the chuck jaws 202' are respectively supported. The radially oriented passageways may guide a radial movement of the chuck jaws 202', and at the same time may rotationally fix the chuck jaws 202' to the screw 215'.

The chuck body 220' may support a two-part sleeve inclusive of a front sleeve 206' and a rear sleeve 204'. The front sleeve 206' may be mounted for rotation on the chuck body 220'. The forward end of the front sleeve 206' may fixedly support a cone 209'. The cone 209' may include passageways 209a' through which the chuck jaws 202' are respectively slidable. The passageways 209a' in the cone 209' may rotationally fix the cone 209' to the chuck jaws 202'. Thus, the chuck jaws 202', the cone 209', the front sleeve 206', and the screw 215' may be rotationally fixed together.

The front sleeve 206' may support an output gear 226'. Similar to the previous example, the output gear 226' and the front sleeve 206' may be rotationally fixed together. In contrast to the previous example, the output gear 226' may be axially moveable (i.e., in the direction of the axis 250') relative to the front sleeve 206'. For example, the front sleeve 206' and the output gear 226' may be coupled together via cooperating splines that extend in a longitudinal direction. The cooperating splines may be respectively provided on the radially inward facing surface of the front sleeve 206' and the radially outward facing surface of the output gear 226'. Such spline couplings (and other alternative couplings) are well known in this art. The output gear 226' (which may be rotationally fixed to the front sleeve 206') may be rotatable relative to the chuck body 220' (and thus the nut 216'). The rear face of the output gear 226 may be provided with a set of teeth 214'.

The front sleeve 206' may support the switch 240. The switch 240 may be moveable in the axial direction relative to the sleeve 206'. The front sleeve 206' may include a slot 249 for guiding the longitudinal movement of the switch 240. The radially inward end of the switch 240 may be fixedly connected to a shift ring 242. The shift ring 242 may be fixedly mounted on the output gear 226'. Thus, the switch 240, the shift ring 242, and the output gear 226' may be moveable together along the axis 250' relative to the front sleeve 206' and the chuck body 220' (and thus the nut 216').

The rear sleeve 204' may be mounted for rotation on the chuck body 220'. The rear sleeve 204' may be rotatable relative to the front sleeve 206'. The rear sleeve 204' may have a front face 207' that is inclined relative to the axis 250' of the chuck body 220'. The front face 207' of the rear sleeve 204' may act upon the rear face of a nutating gear 210'.

The nutating gear 210' may be arranged in the tool chuck 275' such that its axis is inclined relative to the axis 250' of the chuck body 220'. The nutating gear 210' may be mounted in such a way that it remains rotationally fixed relative to the chuck body 220'. To this end, the nutating gear 210' may include radially inward facing passages 211' that may respectively cooperate with the spherical splines 217'. As the nutating gear 210' nutates, the spherical splines 217' may pass back and forth through the passages 211' and at the same time may prevent the nutating gear 210' from rotating relative to the chuck body 220'.

The front face of the nutating gear 210' may be provided with a set of teeth 212'. The teeth 212' of the nutating gear 210' may engage with the teeth 214' of the output gear 226'.

The tool chuck 275' may operate differently depending on the axial position of the switch 240. On the one hand, when the switch 240 is in the axial rearward position, the nutating gear reduction mechanism may be enabled so that a user may have a mechanical advantage in tightening the chuck jaws 202'. On the other hand, when the switch 240 is in the axial forward position, the nutating gear reduction mechanism may be disabled so that the user may tighten the chuck jaws 202' more rapidly and without the mechanical advantage.

More specifically, the operator may push the switch 240 in an axially rearward direction through the slot 249 of the front sleeve 206'. The rearward axial movement of the switch 240 may impart a corresponding rearward axial movement of shift ring 242 and the output gear 226' relative to the chuck body 220'. During this movement, the nut 216' may pass through an opening in the output gear 226'.

With the switch 240 in the axial rearward position, the teeth 214' of the output gear 226' may be engaged with the teeth 212' of the nutating gear 210', thereby enabling the nutating gear reduction mechanism. The operator may then turn the rear sleeve 204' to actuate the tool chuck 275' as described above in section III.

The operator may push the switch 240 in an axially forward direction through the slot 249 of the front sleeve 206'. The forward axial movement of the switch 240 may impart a corresponding forward axial movement of shift ring 242 and the output gear 226' relative to the chuck body 220'. During this movement, the nut 216' may pass through an opening in the output gear 226'.

With the switch 240 in the axial forward position, the teeth 214' of the output gear 226' may be disengaged from the teeth 212' of the nutating gear 210', thereby disabling the nutating gear reduction mechanism. The operator may then turn the front sleeve 206' (and thus the cone 209') relative to the chuck body 220'. The cone 209' may rotate together with the chuck jaws 202' and the screw 215'. The relative rotation between the screw 215' and the nut 216' may advance or retract the screw 215' along the axis 250' (depending on the rotation direction of the front sleeve 206'). As the screw 215' advances or retracts relative to the chuck body 220', the screw 215' may push of pull on the chuck jaws 202', thereby closing or opening the same.

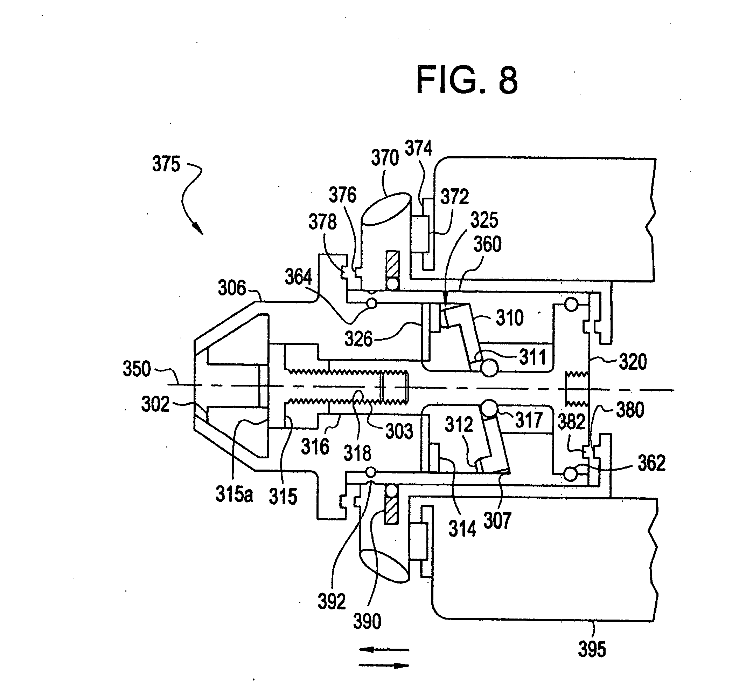

Fig. 8 shows another example of a tool chuck 375 with a nutating gear reduction. This example is similar to the previous examples to the extent that it includes a nutating gear reduction. Also, this example may implement "pusher" chuck jaws 302. However, there are several notable differences as described below.

With reference to Fig. 8, the tool chuck 375 may include a chuck body 320. The rear end of the chuck body 320 may be mounted on a spindle of a power driver 395.

An intermediate portion of the chuck body 320 may be provided with splines 317 that interact with radially inward facing passages 311 of a nutating gear 310 so that the chuck body 320 and the nutating gear 310 are rotationally fixed together. In this example, the splines 317 may have a spherical shape. However, it will be appreciated that splines 317 having numerous, alternative shapes may be suitably implemented. In this example, four splines 317 may be uniformly spaced around the circumference of the chuck body 320. However, the example is not limited in this regard. For example, the number and the spacing between the splines 317 may be varied.

The forward end of the chuck body 320 may include a nut 316. The nut 316 may be screw coupled to a screw 315. To this end, the nut 316 may have radially interior threads 318 that engage radially outward facing threads 303 of the screw 315. The chuck body 320 (together with the nut 316) may be rotatable relative to the screw 315. During this relative rotation, the interaction of the threads 303, 318 may influence the screw 315 to advance and/or retract along the axis 350 of the chuck body 320.

The forward end of the screw 315 may include radially oriented passageways 315a in which the chuck jaws 302 are respectively supported. The radially oriented passageways 315a may guide a radial movement of the chuck jaws 302, and at the same time may rotationally fix the chuck jaws 302 to the screw 315.

The chuck body 320 may support a nutating mechanism housing ("NMH") sleeve 360. The NMH sleeve 360 may be rotatable relative to.the chuck body 320. Such relative rotation may be facilitated by a bearing 362. The NMH sleeve 360 may have a front face 307 that is inclined relative to the axis 350 of the chuck body 320. The front face 307 of the NMH sleeve 360 may act upon the rear face of the nutating gear 310.

The NMH sleeve 360 may support a front sleeve 306 and a clutch and lock ("CL") sleeve 370. The front sleeve 306 may be rotatable relative to the NMH sleeve 360. This relative rotation may be facilitated by a bearing 364. The front sleeve 306 may include passageways through which the chuck jaws 302 are respectively slidable. The passageways of the front sleeve 306 may be inclined relative to the axis 350 of the chuck body 320. In this way, when the chuck jaws 302 are advanced (via the screw 315), the passageways of the front sleeve 306 may influence the chuck jaws 302 in a radial inward direction through the radially oriented passageways 315a of the screw 315 and toward the axis 350. And when the chuck jaws 302 are retracted (via the screw 315), the passageways of the front sleeve 306 may influence the chuck jaws 302 in a radial outward direction through the radially oriented passageways 315a of the screw 315 and away from the axis 350. The passageways in the front sleeve 306 may rotationally fix the front sleeve 306 to the chuck jaws 302. Thus, the chuck jaws 302, the front sleeve 306, and the screw 315 may be rotationally fixed together.

The rear end of the front sleeve 306 may fixedly support an output gear 326. The chuck body 320 may extend through an opening of the output gear 326. The rear face of the output gear 326 may be provided with a set of teeth 314.

The nutating gear 310 may be arranged in the tool chuck 375 such that its axis is inclined relative to the axis 350 of the chuck body 320. The chuck body 320 may extend through an opening of the nutating gear 310. The nutating gear 310 may be mounted in such a way that it remains rotationally fixed relative to the chuck body 320. That is, the nutating gear 310 may nutate without rotating relative to the chuck body 320 about the axis 350. To this end, the nutating gear 310 may include radially inward facing features that may cooperate with the spherical splines 317 provided on the chuck body 320. In this example, the radially inward facing features may be in the form of passages 311 that respectively receive the spherical splines 317. The passages 311 may extend along a longitudinal axis of the nutating gear 310. Thus, as the nutating gear 310 nutates, the spherical splines 317 may pass back and forth through the passages 311 and at the same time may prevent the nutating gear 310 from rotating relative to the chuck body 320.

It will be appreciated that the nutating gear 310 may be rotationally fixed to the chuck body 320 by structure other than the spherical splines 317.

A bearing (not illustrated) may be interposed between the NMH sleeve 360 and the nutating gear 310 to facilitate a relative rotational movement between the NMH sleeve 360 and the nutating gear 310. The front face of the nutating gear 310 may be provided with a set of teeth 312. The teeth 312 of the nutating gear 310 may engage with the teeth 314 of the output gear 326.

The nutating gear 310 may be inclined relative to the output gear 326 so that the teeth 312 of nutating gear 310 may only touch the teeth 314 of the output gear 326 at one contact area 325. Thus, the diameter and circumference of the nutating gear 310 may be larger than that of the output gear 326. Further, the corresponding sets of teeth 312, 314 may be of the same pitch so that the larger nutating gear 310 may have more teeth 312 around its circumference than does the smaller output gear 326.

The CL sleeve 370 may be mounted on the NMH sleeve 360 so that the CL sleeve 370 may be axially moveable relative to the NMH sleeve 360 and rotationally fixed to the NMH sleeve 360. For example, the radially inward facing surface of the CL sleeve 360 may include longitudinal splines (not illustrated) that cooperate with corresponding features provided on the radially outward facing surface of the NMH sleeve 360. Such coupling features are well known in this art, and therefore a detailed discussion of the same is omitted.

The CL sleeve 370 may be axial moveable relative to the NMH sleeve 360 between the illustrated rearward position (or "chuck drive mode") and a forward position (or "chuck lock mode"). As shown in Fig. 8, in the chuck drive mode, a rear face of the CL sleeve 370 may include features 372 that engage with corresponding features 374 provided on the driver housing. The features 372, 374 may cooperate to rotationally fix the CL sleeve 370 (and thus the NMH sleeve 360) to the driver housing. The features 372, 374 may be designed to have profiles so that they separate from each other when a predetermined torque is applied between the CL sleeve 370 and the driver housing.

In the chuck lock mode, a front face of the CL sleeve 370 may include protrusions 376 that engage with corresponding recesses 378 provided on a rear face of the front sleeve 306. The protrusions 376 and the recesses 378 may cooperate to rotationally fix the CL sleeve 370 (and thus the NMH sleeve 360) to the front sleeve 306. Also, another front face of the CL sleeve 370 may include protrusions 380 that engage with corresponding recesses 382 provided on a rear face of the chuck body 320. The protrusions 380 and the recesses 382 may cooperate to rotationally fix the CL sleeve 370 (and thus the NMH sleeve 360) to the chuck body 320. In the chuck lock mode, the CL sleeve 370, the NMH sleeve 360, the front sleeve 306, and the chuck body 320 may be rotationally fixed together. The CL sleeve 370 may include a spring loaded detent mechanism 390 that cooperates with a recess 392 provided in the NMH sleeve 360 to provisionally retain the CL sleeve 370 in the chuck lock mode.

The tool chuck 375 may operate differently depending on the axial position of the CL sleeve 370.

An operator may push the CL sleeve 370 in an axial rearward direction, as illustrated in Fig. 8, to operate the tool chuck 375 in the chuck drive mode. The chuck drive mode may allow the operator to utilize the output of the driver 395 to actuate the chuck jaws 302. This may speed the chuck jaw actuation process, as compared to the manually operated tool chuck described with respect to the previous examples.

In the chuck drive mode depicted in Fig. 8, and as stated above, the cooperating features 372, 374 may be engaged to rotationally fix together the CL sleeve 370 (and thus the NMH sleeve 360) and the driver housing. Further, as shown, the protrusions 376 of the CL sleeve 370 may be disengaged from the recesses 378 of the front sleeve 306, and the protrusions 380 of the CL sleeve 370 may be disengaged from the recesses 382 of chuck body 320. Thus, the front sleeve 306 may be rotatable relative to the CL sleeve 370, and the chuck body 320 may be rotatable relative to the CL sleeve 370.

The operator may then actuate the driver 395 to rotate the chuck body 320. The chuck body 320, by virtue of the splines 317, may rotate together with the nutating gear 310 relative to the NMH sleeve 360 (which may be rotationally fixed to the CL sleeve 370 and the driver housing). By virtue of the relative rotation between the nutating gear 310 and the NMH sleeve 360, the front surface 307 of the NMH sleeve 360 may cause the nutating gear 310 to nutate about the chuck body 320. As the nutating gear 310 rotates relative to the NMH sleeve 360 and nutates about the chuck body 320, it may rotationally drive the front sleeve 306 via the interaction between the teeth 312, 314.

During one revolution of the chuck body 320, the nutating gear 310 may drive the output gear 326 (and thus the front sleeve 306) to rotate by one full revolution plus an angular distance equivalent to the difference between the number N3 of teeth 312 of the nutating gear 310 and the number N4 of teeth 314 of the output gear 326. At the same time, the nut 316 of the chuck body 320 may rotate through one full revolution. In this way, a speed differential may be achieved between the rotationally driven front sleeve 306 and the rotationally driven nut 316. And since the front sleeve 306 may rotate together with the chuck jaws 302, the chuck jaws 302 (seated in the radial passageways 315a) may drive the screw 315 to rotate relative to the nut 316 of the chuck body 320. This relative rotation may advance or retract the screw 315 along the axis 350 (depending on the rotation direction of the chuck body 320) by virtue of the interaction between the radially inward facing threads 318 and the radially outward facing threads 303. As the screw 315 advances or retracts relative to the chuck body 320, the screw 315 may push or pull on the chuck jaws 302, thereby opening and/or closing the same.

As in the previous examples, the difference in the number N3 of teeth 312 provided on the nutating gear 310 and the number N4 of teeth 314 provided on the output gear 326 may be varied to alter the final output drive ratio of the output gear 326.

The cooperating features 372, 374 may function to limit the torque between the CL sleeve 370 and the driver housing. This torque limiting feature may take the operator out of the process, thereby effectively preventing the tool chuck from over tightening.

Once a tool is clamped by the chuck jaws 302, the operator may push the CL sleeve 370 in an axial forward direction to operate the tool chuck 375 in the chuck lock mode. The chuck lock mode may prevent the chuck jaws 302 from loosening. Such loosening may occur, for example, when the tool clamped by the chuck jaws 302 is driven in a reverse direction (for example, when backing out a screw). The rotational resistance of the screw may influence the chuck jaws 302 (and therefore the screw 315) to rotate relative to the nut 316. Such relative rotation may result in a reduction of the clamping pressure exerted by the chuck jaws 302. In a worst case scenario, the chuck jaws 302 may be rotationally driven while slipping occurs between the chuck jaws 302 and the tool.

In the chuck lock mode, the cooperating features 372, 374 may be disengaged so that the CL sleeve 370 (and thus the NMH sleeve 360) may be rotatable relative to the driver housing. Further, the protrusions 376 of the CL sleeve 370 may be engaged with the recesses 378 of the front sleeve 306, and the protrusions 380 of the CL sleeve 370 may be engaged with the recesses 382 of chuck body 320. Thus, the CL sleeve 370, the NMH sleeve 360, and the front sleeve 306 may be rotatable together with the chuck body 320. When the operator actuates the driver 395, the entire tool chuck 375 may rotate together as a Single unit. The detent mechanism 390 cooperating with the recess 392 may retain the CL sleeve in the axially forward position.

In the chuck lock mode, the CL sleeve 370 may prevent any relative rotation from occurring between the front sleeve 306 (and thus the chuck jaws 302 and the screw 315) and the chuck body 320 (and thus the nut 316). In this way, the CL sleeve 370 may prevent the chuck jaws 302 from loosening.

It will be appreciated that the CL sleeve may be suitably implemented in other examples. For example, with slight modifications that will become apparent in view of the present disclosure, the CL sleeve may be incorporated into the examples discussed above in sections III and IV. The incorporated CL sleeve may serve the same advantageous functions described above.

The various examples include chuck bodies that may be separate and distinct elements from the spindle of the driver. However, it will be readily apparent to those skilled in the art that the spindle and the chuck body may be of a unitary, one-piece construction.

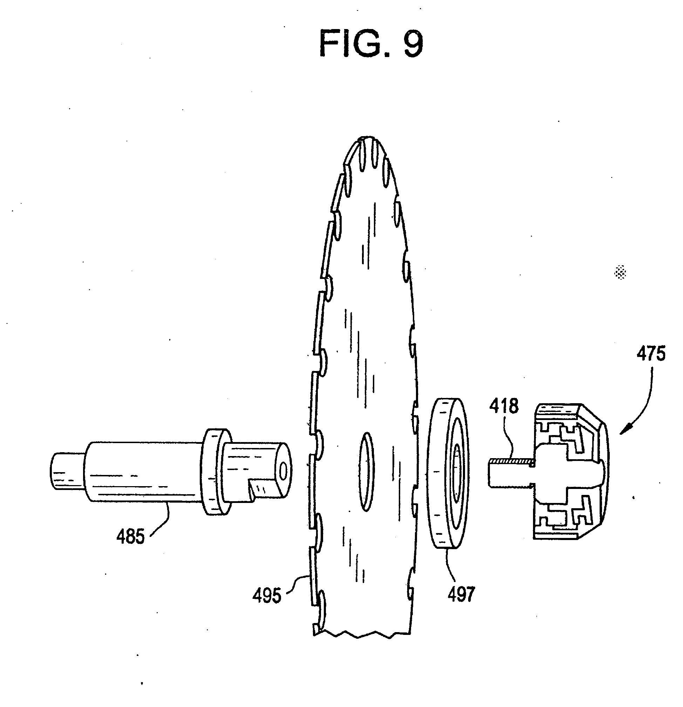

Figs. 9-11 illustrate a fastener implementing a nutating gear reduction feature that may be somewhat similar to the ones described above.

With reference to Fig. 9, the fastener 475 may cooperate with a hub 485 of a saw (not shown) so that a saw blade 495 may be mounted on the saw. For example, the fastener 475 may include an external thread 418 that is screw coupled to an internal thread provided on the distal end of the hub 485. A washer 497 may be interposed between the fastener 475 and the saw blade 495.

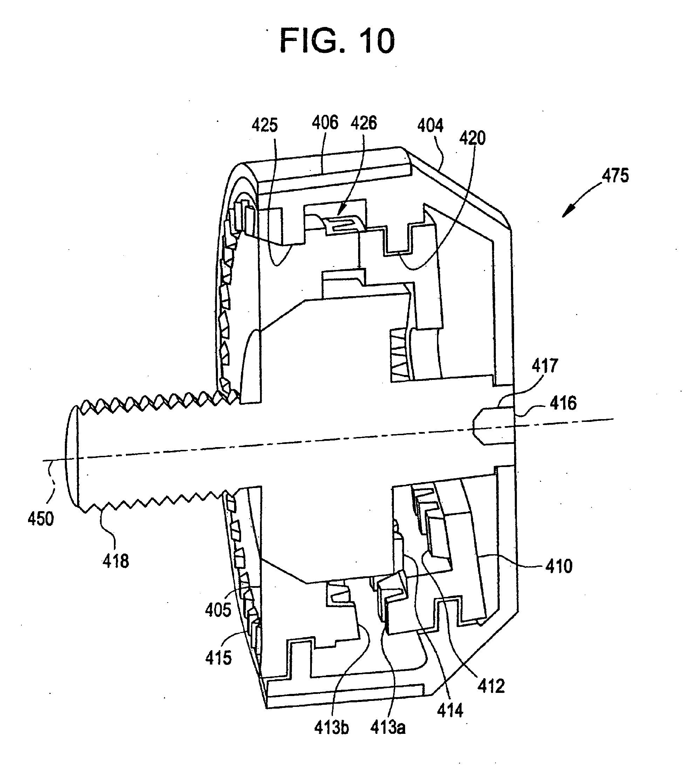

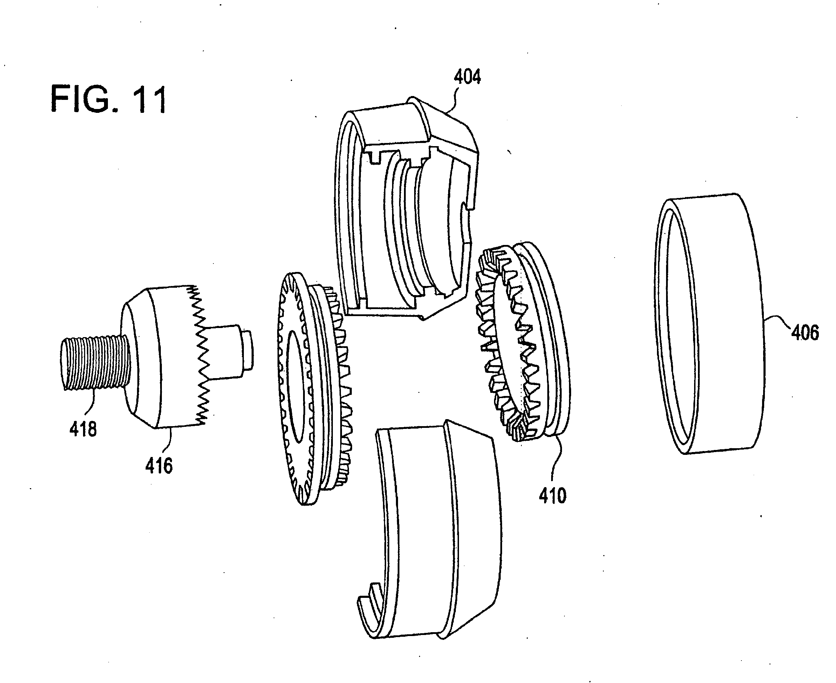

With reference to Fig. 10, the fastener 475 may include a housing 404. The housing 404 may be of a two-piece construction (as shown in Fig. 11) to facilitate assembly. A sleeve 406 may be press fit on the housing 404. The exterior surface of the sleeve 406 and/or the housing 404 may be knurled.

The housing 404 may rotatably support a nutating gear 410 and an anchor flange 405. To this end, the housing 404 may include a shoulder 420 cooperating with a circumferential groove in the nutating gear 410, and a shoulder 425 cooperating with a circumferential groove in the anchor flange 405. The anchor flange 405 may be rotatable relative to the housing 404 about a main axis 450. A driven gear 416 may extend through respective openings provided in the nutating gear 410 and the anchor flange 405.

The nutating gear 410 may be arranged in the housing 404 such that its axis is inclined relative to the main axis 450. The nutating gear 410 may includes two sets of teeth: one set of teeth 413a interacts with the anchor flange 405; and another set of teeth 412 interacts with the driven gear 416.

The anchor flange 405 may include a set of teeth 415 for interacting with the washer 497, and a set of teeth 413b that engage with the teeth 413a on the nutating gear 410. The number of teeth 413b on the anchor flange 405 and the number of teeth 413a on the nutating gear 410 may be selected so that the anchor flange 405 and the nutating gear 410 maintain the same relative rotational positions with respect to each other. By way of example only, an equal number of the teeth 413a, 413b may be provided. In alternative embodiments, different numbers of teeth 413a, 413b may be provided so that the nutating gear 410 may rotate relative to the anchor flange 405. Such relative rotation (between the nutating gear 410 and the anchor flange 405) may be controlled by varying the difference in the number of teeth 413a, 413b.

The driven gear 416 may be rotatably supported by the housing 404. To this end, a distal end of the driven gear 416 (to the right in Fig. 10) may extend into an aperture in the housing 404. The driven gear 416 may also be rotatably supported by the anchor flange 405. For example, as shown, a tapered bearing surface of the driven gear 416 may abut against a cooperating tapered bearing surface of the anchor flange 405.

The distal end of the driven gear 416 may include a feature for receiving a tool that a user may optionally utilize to rotationally drive driven gear 416. In this example embodiment, the feature may be a hex recess 417 adapted to receive a Standard Allen wrench (not shown). Numerous and varied tool receiving features (other than the hex recess 417), which are well known in this art, may be suitably implemented. By way of example only, a user may rotationally drive the driven gear 416 if the nutating gear reduction becomes inoperable. The driven gear 416 may also include a protruding shaft (to the left in Fig. 10) having the external thread 418. As discussed above, the external thread 418 may be screw coupled to an internal thread provided on the distal end of the hub 485 (see Fig. 9). The driven gear 416 may have a set of teeth 414 that engage with the teeth 412 of the nutating gear 410.

The nutating gear 410 may be inclined relative to the driven gear 416 so that the teeth 12 of the nutating gear 410 may only touch the teeth 414 of the driven gear 416 at one contact area 426. Thus, the diameter and circumference of the nutating gear 410 may be larger than that of the driven gear 416. Further, the corresponding sets of teeth 412, 414 may be of the same pitch so that the larger nutating gear 410 may have more teeth 412 around its circumference than does the smaller driven gear 416.

The fastener 475 may operate as follows. Consider a tightening Operation. Initially, an operator may turn the sleeve 406 and/or housing 404 relative to the hub 485 (which supports the saw blade 495 and the washer 497) to screw couple together the external thread 418 of the fastener 475 and the internal thread of the hub 485. Here, the component parts of the fastener 475 may rotate together as a unit (and relative to the hub 485) due to the internal frictional drag within the fastener 475. The interaction between the cooperating threads of the fastener 475 and the hub 485 may draw the driven gear 416 into the hub 485.

Eventually, the teeth 415 of the anchor flange 405 may contact and press against the washer 497 so that the anchor flange 405 (and thus the nutating gear 410) may become rotationally grounded to the washer 497 (and thus the hub 485). In this condition, further rotation of the sleeve 406 and/or housing 404 causes the shoulders 420, 425 of the housing 404 to respectively slide through the circumferential grooves of the nutating gear 410 and the anchor flange 405. The shoulder 420 (as it slides through the circumferential groove of the nutating gear 410) may cause the nutating gear 410 to nutate about the driven gear 416. As the nutating gear 410 nutates, the contact area 426 between the nutating gear 410 and the driven gear 416 may move around the main axis 450.

As stated above, the nutating gear 410 may be rotationally fixed to the anchor flange 405. Thus, during one nutation of the nutating gear 410, the driven gear 416 may be driven to rotate by an angular distance equivalent to the difference between the number N3 of teeth 412 of the nutating gear 410 and the number N4 of teeth 414 of the driven gear 416.

The relative rotation between the driven gear 416 and the hub 485 may tighten the fastener 475 (by virtue of the interaction between the external thread 418 of the driven gear 416 and the internal thread of the hub 485) to securely clamp the saw blade 495 in position.

It will be readily apparent that a loosening operation may be achieved by turning the sleeve 406 and/or housing 404 in a direction opposite to that of the tightening operation.

As in the above examples, the difference in the number N3 of teeth 412 provided on the nutating gear 410 and the number N4 of teeth 414 provided on the driven gear 416 may be varied to alter the final output drive ratio of the driven gear 416.

In the embodiment depicted in Figs. 9-11, the fastener 475 includes an external thread 418 that cooperates with an internal thread of the hub 485. In alternative embodiments, the fastener 475 (specifically, the driven gear 416) may include an internal thread that cooperates with an external thread of the hub.

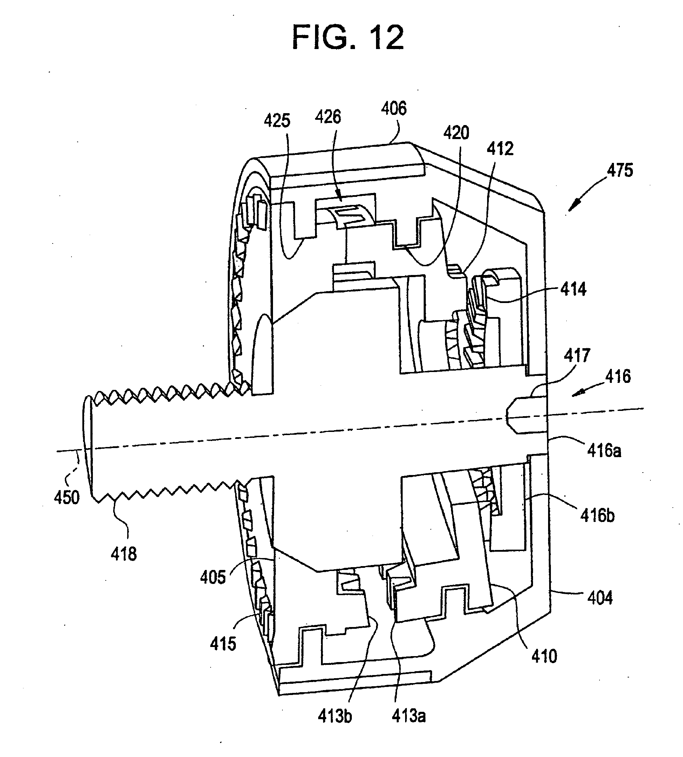

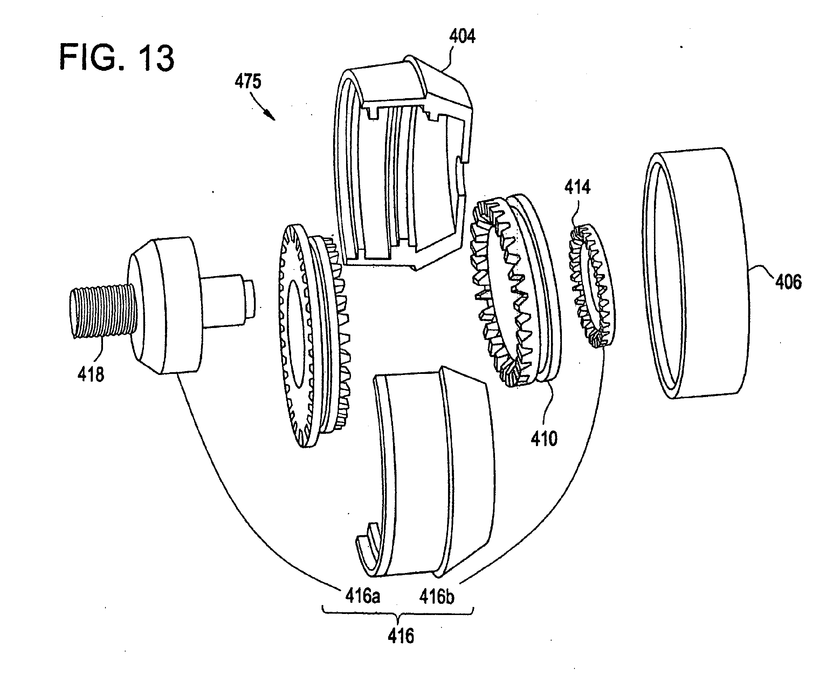

In the embodiment depicted in Figs. 9-11, the sets of teeth 412 and 413a are provided on the same face of the nutating gear 410, and thus the teeth 414 (of the driven gear 416) and the teeth 413b (of the anchor flange 405) are provided on the same side of the nutating gear 410. However, the invention is not limited in this regard. For example, as shown in Figs. 12 and 13, the sets of teeth 412 and 413a may be provided on opposite faces of the nutating gear 410. Here, the teeth 414 (of the driven gear 416) and the teeth 413b (of the anchor flange 405) are provided on opposite sides of the nutating gear 410.

As shown in Fig. 13, the driven gear 416 may be of a two-piece construction to facilitate assembly of the fastener 475. The two-piece construction may include a shaft portion 416a and a distal flange portion 416b. The distal flange portion 416b, which may be fixedly mounted on the shaft portion 416a, may include the teeth 414 that engage with the teeth 412 of the nutating gear 410

In other respects, the fastener 475 depicted in Figs. 12 and 13 may be structurally and functionally similar to the fastener 475 depicted in Figs. 9-11.

The example fastener may have numerous and varied applications that involve securing parts together (other than securing a saw blade to the hub of a saw). The example fastener may be suitable for application where the parts are to be secured together temporarily and without requiring the use of tools (such as keys, wrenches and/or screwdrivers, for example). By way of example only, the fastener may be implemented to secure together component parts of framework (such as scaffolding, staging, etc.), recreational equipment (such as the wheel and frame of a bicycle) and lawn and garden equipment (such as lawn mowers, chain saws, etc.).

In alternative embodiments, the concepts discussed above may be implemented in an instrument to provide a fine adjustment feature. By way of example only, such Instruments may include telescopes, video cameras, lathes and/or drill presses. Here, the anchor flange 405 may be fixed to the instrument housing (or some other supporting structure). When a user rotates the housing 404, the nutating gear 410 will nutate and rotationally drive the driven gear 416. By virtue of the nutating gear reduction feature, one rotation of the housing 404 would cause only a fractional rotation of the driven gear 416, which may be operatively connected to various gears, optics or other component parts of the instrument.

## Claims

1.  A fastener (475) comprising:

    a housing (404) defining an axis (450);
    an anchor flange (405) mounted on the housing (404);
    a driven gear (416); and
    a nutating gear (410) mounted on the housing (475) for nutation about the axis (450) to rotationally drive the driven gear (416) relative to the anchor flange (405);
    **characterised in that** the driven gear (416) is supported by the anchor flange (405).

2.  The fastener (475) as set forth in claim 1, wherein the nutating gear (410) is mounted for rotation on the housing (404).

3.  The fastener (475) as set forth in claim 1, wherein the nutating gear (410) is rotationally fixed to the anchor flange (405).

4.  The fastener (475) as set forth in claim 1, wherein the anchor flange (405) is mounted on the housing (404) for rotation about the axis (450).

5.  The fastener (475) as set forth in claim 1, wherein the housing (404) has shoulders (420, 425) that are respectively received in circumferential grooves provided in the nutating gear (410) and the anchor flange (405).

6.  The fastener (475) as set forth in claim 1, wherein the driven gear (416) has an external thread (418) for cooperating with an internal thread of a mounting structure (485).

7.  The fastener (475) set forth in claim 1, wherein the driven gear (416) has an internal thread for cooperating with an external thread of a mounting structure (485).

8.  The fastener (475) as set forth in claim 1, wherein the nutating gear (410) is interposed between the anchor flange (405) and the driven gear (416).

9.  The fastener (475) as set forth in claim 8, wherein the driven gear (416) comprises a shaft portion and a flange portion mounted on the shaft portion.

10. The fastener (475) as set forth in claim 1, wherein the housing (404) is of a two-piece construction.

11. The fastener (475) as set forth in claim 10, further comprising a sleeve (406) press fit onto the housing (404).

12. The fastener (475) as set forth in claim 1, wherein the housing (404) has a circular cross sectional profile.

13. A method comprising:

    providing a fastener (475) having a housing (404) supporting a driven gear (416) and a nutating gear (410);
    rotating the housing (404), the driven gear (416) and the nutating gear (410) together as a unit to screw couple the fastener (475) to a mounting structure (485); and
    tightening the fastener (475) on the mounting structure (485) by rotating the housing (404) relative to the nutating gear (410) so that the nutating gear (410) nutates and rotationally drives the driven gear (416) relative to the housing (404).

**Patentansprüche**

1. Befestigungselement (475), das Folgendes umfasst:

    ein Gehäuse (404), das eine Achse (450) definiert,
    einen Ankerflansch (405), der an dem Gehäuse (404) angebracht ist,
    ein angetriebenes Zahnrad (416) und
    ein Taumelzahnrad (410), das zum Taumeln um die Achse (450) an dem Gehäuse (475) angebracht ist, um das angetriebene Zahnrad (416) im Verhältnis zu dem Ankerflansch (405) drehend anzutreiben,
    **dadurch gekennzeichnet, dass** das angetriebene Zahnrad (416) durch den Ankerflansch (405) getragen wird.

2. Befestigungselement (475) nach Anspruch 1, wobei das Taumelzahnrad (410) zum Drehen an dem Gehäuse (404) angebracht ist.

3. Befestigungselement (475) nach Anspruch 1, wobei das Taumelzahnrad (410) drehbar an dem Ankerflansch (405) befestigt ist.

4. Befestigungselement (475) nach Anspruch 1, wobei der Ankerflansch (405) zum Drehen um die Achse (450) an dem Gehäuse (404) angebracht ist.

5. Befestigungselement (475) nach Anspruch 1, wobei das Gehäuse (404) Absätze (420, 425) hat, die jeweils in umlaufenden Rillen aufgenommen werden, die in dem Taumelzahnrad (410) und dem Ankerflansch (405) bereitgestellt werden.

6. Befestigungselement (475) nach Anspruch 1, wobei das angetriebene Zahnrad (416) ein Außengewinde (418) hat, um mit einem Innengewinde einer Anbringungsstruktur (485) zusammenzuwirken.

7. Befestigungselement (475) nach Anspruch 1, wobei das angetriebene Zahnrad (416) ein Innengewinde hat, um mit einem Außengewinde einer Anbringungsstruktur (485) zusammenzuwirken.

8. Befestigungselement (475) nach Anspruch 1, wobei das Taumelzahnrad (410) zwischen dem Ankerflansch (405) und dem angetriebenen Zahnrad (416) zwischengeschaltet ist.

9. Befestigungselement (475) nach Anspruch 8, wobei das angetriebene Zahnrad (416) einen Schaftabschnitt und einen Flanschabschnitt, der an dem Schaftabschnitt angebracht ist, umfasst.

10. Befestigungselement (475) nach Anspruch 1, wobei das Gehäuse (404) eine zweiteilige Konstruktion ist.

11. Befestigungselement (475) nach Anspruch 10, das ferner eine Hülse (406) umfasst, die auf das Gehäuse (404) aufgepresst ist.

12. Befestigungselement (475) nach Anspruch 1, wobei das Gehäuse (404) ein kreisförmiges Querschnittsprofil hat.

13. Verfahren, das Folgendes umfasst:

    das Bereitstellen eines Befestigungselementes (475), das eine Gehäuse (404) hat, das ein angetriebenes Zahnrad (416) und ein Taumelzahnrad (410) trägt,
    das Drehen des Gehäuses (404), des angetriebenen Zahnrades (416) und des Taumelzahnrades (410) zusammen als eine Einheit, um das Befestigungselement (475) schraubend an eine Anbringungsstruktur (485) zu koppeln, und
    das Anziehen des Befestigungselementes (475) an der Anbringungsstruktur (485) durch das Drehen des Gehäuses (404) im Verhältnis zu dem Taumelzahnrad (410), so dass das Taumelzahnrad (410) taumelt und das angetriebene Zahnrad (416) im Verhältnis zu dem Gehäuse (404) drehend antreibt.

**Revendications**

1. Dispositif de fixation (475) comprenant :

    un logement (404) définissant un axe (450) ;
    une bride d'ancrage (405) montée sur le logement (404) ;
    une roue dentée menée (416) ; et
    une roue dentée en nutation (410) montée sur le logement (475) pour une nutation autour de l'axe (450) afin d'entraîner en rotation la roue dentée menée (416) par rapport à la bride d'ancrage (405),
    **caractérisé en ce que** la roue dentée menée (416) est supportée par la bride d'ancrage (405).

2. Dispositif de fixation (475) selon la revendication 1, dans lequel la roue dentée en nutation (410) est montée pour une rotation sur le logement (404).

3. Dispositif de fixation (475) selon la revendication 1, dans lequel la roue dentée en nutation (410) est fixée en rotation à la bride d'ancrage (405).

4. Dispositif de fixation (475) selon la revendication 1, dans lequel la bride d'ancrage (405) est montée sur le logement (404) pour une rotation autour de l'axe (450).

**5.** Dispositif de fixation (475) selon la revendication 1, dans lequel le logement (404) présente des épaulements (420, 425) qui sont respectivement reçus dans des rainures circonférentielles ménagées dans la roue dentée en nutation (410) et dans la bride d'ancrage (405).

**6.** Dispositif de fixation (475) selon la revendication 1, dans lequel la roue dentée menée (416) présente un filet externe (418) pour coopérer avec un filet interne d'une structure de montage (485).

**7.** Dispositif de fixation (475) selon la revendication 1, dans lequel la roue dentée menée (416) a un filet interne pour coopérer avec un filet externe d'une structure de montage (485).

**8.** Dispositif de fixation (475) selon la revendication 1, dans lequel la roue dentée en nutation (410) est intercalée entre la bride d'ancrage (405) et la roue dentée menée (416).

**9.** Dispositif de fixation (475) selon la revendication 8, dans lequel la roue dentée menée (416) comprend une partie d'arbre et une partie de bride montée sur la partie d'arbre.

**10.** Dispositif de fixation (475) selon la revendication 1, dans lequel le logement (404) a une structure en deux pièces.

**11.** Dispositif de fixation (475) selon la revendication 10, comprenant en outre un manchon (406) ajusté sous pression sur le logement (404).

**12.** Dispositif de fixation (475) selon la revendication 1, dans lequel le logement (404) a un profil circulaire en coupe transversale.

**13.** Procédé comprenant les étapes consistant à :

fournir un disposition de fixation (475) ayant un logement (404) supportant une roue dentée menée (416) et une roue dentée en nutation (410) ; faire tourner le logement (404), la roue dentée menée (416) et la roue dentée en nutation (410) conjointement sous la forme d'une unité pour coupler par vissage le dispositif de fixation (475) à une structure de montage (485) ; et resserrer le dispositif de fixation (475) sur la structure de montage (485) en faisant tourner le logement (404) par rapport à la roue dentée en nutation (410) de sorte que la roue dentée en nutation (410) tourne et entraîne en rotation la roue dentée menée (416) par rapport au logement (404) .

# FIG. 1A

# FIG. 1B

EP 1 914 031 B1

FIG. 2

# FIG. 3A

EP 1 914 031 B1

FIG. 3B

# FIG. 4A

EP 1 914 031 B1

FIG. 4C

FIG. 4B

# FIG. 5A

EP 1 914 031 B1

FIG. 5B

# FIG. 6

EP 1 914 031 B1

FIG. 7

# FIG. 8

EP 1 914 031 B1

# FIG. 9

485

495

497

418

475

# FIG. 10

FIG. 11

404

406

418

416

410

EP 1 914 031 B1

# FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11223123 B
- US 60610531 B
- US 20060061049 A1
- EP 0924038 A2